# EUROPEAN PATENT APPLICATION

(11) **EP 4 835 801 A1**
(43) Date of publication of application: **04.11.2026**
(21) Application number: 24912222.7
(22) Date of filing: 03.12.2024
(51) Int. Cl.: G06Q 50/43, G06Q 30/0208

(54) **COMPUTER, SYSTEM, AND INFORMATION PROCESSING METHOD**

(30) Priority: 27.12.2023 JP 2023220783
(71) Applicant: Hello Space Co., Kumamoto City, Kumamoto 860-0807 (JP)
(72) Inventor: IWASHITA, Takatoshi, Kumamoto City, Kumamoto 860-0807 (JP); BHATT, Devanshu, Dover, Kent, Delaware 19901 (US); RAFAEL, Jojo Simon, Dover, Kent, Delaware 19901 (US)
(74) Representative: Hasegawa, Kan
(86) International application number: PCT/JP2024/042634
(87) International publication number: WO 2025/142332

(57) **Abstract**

A program causes a computer to function as movement information acceptance means 18 and reward giving means 24. The movement information acceptance means 18 accepts information in relation to a user having moved a moving object 50 provided with a power generator 56 configured to charge a battery 55 through movement, the information being accepted from the moving object 50 or a user terminal 40 and being information about a charging amount by which the battery 55 of the moving object 50 has been charged during the movement. The reward giving means 24 gives a reward to the user based on the information about the charging amount.

## Description

### TECHNICAL FIELD

The present invention relates to a computer, a system, and an information processing method.

### BACKGROUND ART

In recent years, electrically-assisted bicycles each obtained by mounting an electrically-driven machine and a battery to a typical bicycle have been used. A motor of the electrically-driven machine of each of such electrically-assisted bicycles provides assistance in a pedaling force and thus enables the bicycle to move forward with less force. Japanese Laid-Open Patent Publication No. 2022-182811 (JP2022-182811A) discloses an electrically-assisted bicycle obtained by mounting a power storage device to a bicycle. The electrically-assisted bicycle charges the power storage device by electromotive force resulting from power generation through traveling of the bicycle and drives a motor by supply of power from this power storage device to provide, by a rotational drive force of the motor, assistance in a pedaling force for the bicycle.

### SUMMARY OF THE INVENTION

In a case where a moving object such as the electrically-assisted bicycle is used in a sharing service, the business operator needs to charge a battery of an electrically-driven machine each time, and this charging imposes a burden on the business operator.

The present disclosure has been made in consideration of this issue, and an object of the present disclosure is to provide a computer, a system, and an information processing method that can prompt a user to charge a battery of a moving object so that a burden on a business operator can be mitigated.

A computer of the present invention is a computer configured to execute a program to function as movement information acceptance means and reward giving means, wherein
the movement information acceptance means accepts information in relation to a user having moved a moving object provided with a power generator configured to charge a battery through movement, the information being accepted from the moving object or a user terminal and being information about a charging amount by which the battery of the moving object has been charged during the movement, and
the reward giving means gives a reward to the user based on the information about the charging amount.

The computer of the present invention may be a computer configured to execute the program to further function as guidance transmission means, wherein
the guidance transmission means transmits a guidance indicating that the moving object is to be moved, the guidance being transmitted to the user terminal, the moving object, or a port in which the moving object has been parked.

The computer of the present invention may be a computer configured to execute the program to further function as destination setting means and guidance transmission means, wherein
the destination setting means sets information about a destination to which the moving object is to be moved, and
the guidance transmission means transmits a guidance indicating that the moving object is to be moved to the destination set by the destination setting means, the guidance being transmitted to the user terminal, the moving object, or a port in which the moving object has been parked.

The destination setting means may set, as the destination to which the moving object is to be moved, a destination in which a power storage device is provided and in which power can be stored from the battery of the moving object into the power storage device.

The computer of the present invention may be a computer configured to execute the program to further function as route guiding means, wherein
the route guiding means transmits, to the user terminal, guiding information about a movement route from a present position of the moving object to a destination to which the moving object is to be moved.

The computer of the present invention may be a computer configured to execute the program to further function as unlocking means, wherein
after the guidance transmission means transmits the guidance indicating that the moving object is to be moved, the guidance being transmitted to the user terminal, the moving object, or the port in which the moving object has been parked, a reservation for moving the moving object is made when reservation information indicating that the moving object is to be moved is received from the user terminal, the moving object, or the port in which the moving object has been parked, and
the unlocking means transmits unlocking information to the moving object so as to enable only a user having made the reservation for moving the moving object to move the moving object.

In the computer of the present invention,
information about an amount of remaining power in the battery may be transmitted from the moving object to the computer, and
the guidance transmission means may transmit, to the user terminal, a guidance indicating that the moving object in which the amount of remaining power is smaller than a predetermined amount is to be moved.

A computer of the present invention is a computer configured to execute a program to function as information acceptance means and reward giving means, wherein
the information acceptance means accepts information in relation to a user having pedaled a moving object provided with a power generator configured to charge a battery through pedaling, the information being accepted from the moving object or a user terminal and being information about a charging amount by which the battery of the moving object has been charged during the pedaling, and
the reward giving means gives a reward to the user based on the information about the charging amount.

A system of the present invention is a system including:
a computer; and
a moving object provided with a power generator configured to charge a battery through movement, wherein
the computer executes a program to function as movement information acceptance means and reward giving means,
the movement information acceptance means accepts information in relation to a user having moved the moving object provided with the power generator configured to charge the battery through movement, the information being accepted from the moving object or a user terminal and being information about a charging amount by which the battery of the moving object has been charged during the movement, and
the reward giving means gives a reward to the user based on the information about the charging amount.

An information processing method of the present invention is an information processing method to be performed by a computer having a control unit, the information processing method including the steps of:
accepting, by the control unit, information in relation to a user having moved a moving object provided with a power generator configured to charge a battery through movement, the information being accepted from the moving object or a user terminal and being information about a charging amount by which the battery of the moving object has been charged during the movement; and
giving, by the control unit, a reward to the user based on the information about the charging amount.

### BRIEF DESCRIPTION OF THE DRAWINGS

FIG. 1 is a block diagram showing a configuration of an information processing system according to an embodiment of the present invention.
FIG. 2 is a schematic diagram showing moving objects, ports, user terminals possessed by users, and a power storage facility in the embodiment of the present invention.
FIG. 3 is a chart showing a flow of information between the constituents in the case of reserving a moving object in the information processing system shown in FIG. 1.
FIG. 4 is a chart showing a flow of information between the constituents in the case of leasing the moving object in the information processing system shown in FIG. 1.
FIG. 5 is a chart showing a flow of information between the constituents in the case of returning the moving object in the information processing system shown in FIG. 1.
FIG. 6 is a chart showing a flow of information between the constituents in the case of charging a battery of a moving object in the information processing system shown in FIG. 1.
FIG. 7 is a chart showing a flow of information between the constituents in the case of charging a power storage device of the power storage facility or a port from a moving object in the information processing system shown in FIG. 1.
FIG. 8 is a flowchart showing a flow of processing to be performed by a management server in the case of charging the battery of the moving object in the information processing system shown in FIG. 1.
FIG. 9 is a flowchart showing a flow of processing to be performed by the management server in the case of charging the power storage device of the power storage facility or the port from the moving object in the information processing system shown in FIG. 1.

### DESCRIPTION OF THE PREFERRED EMBODIMENTS

### <Overview of Information Processing System 1>

Hereinafter, an embodiment of the present invention will be described with reference to the drawings. An information processing system 1 according to the present embodiment is utilized in a sharing service in which moving objects 50 such as bicycles are used by a plurality of persons. Specifically, one or a plurality of the moving objects 50 such as bicycles are parked in a locked state in each of ports 60, and each of the users who desires to use any of the moving objects 50 unlocks the moving object 50 by using a user terminal 40 possessed by the user. Then, the user moves the moving object 50 to the original port 60 or another one of the ports 60, and parks and locks the moving object 50 in this port 60. Consequently, usage of the moving object 50 is completed. Such a sharing service and the information processing system 1 will be described in detail below.

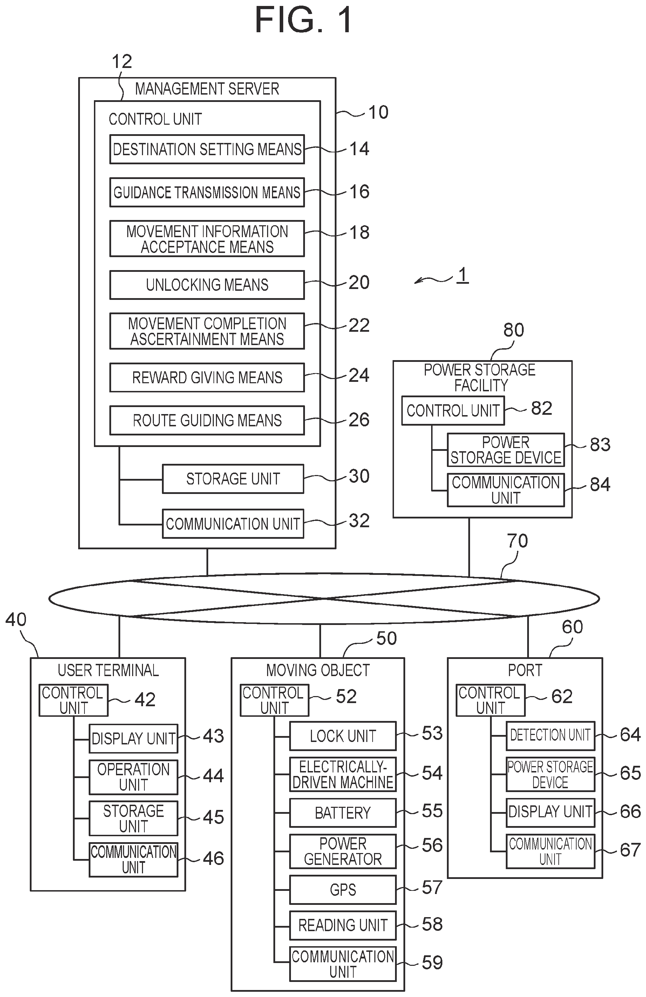

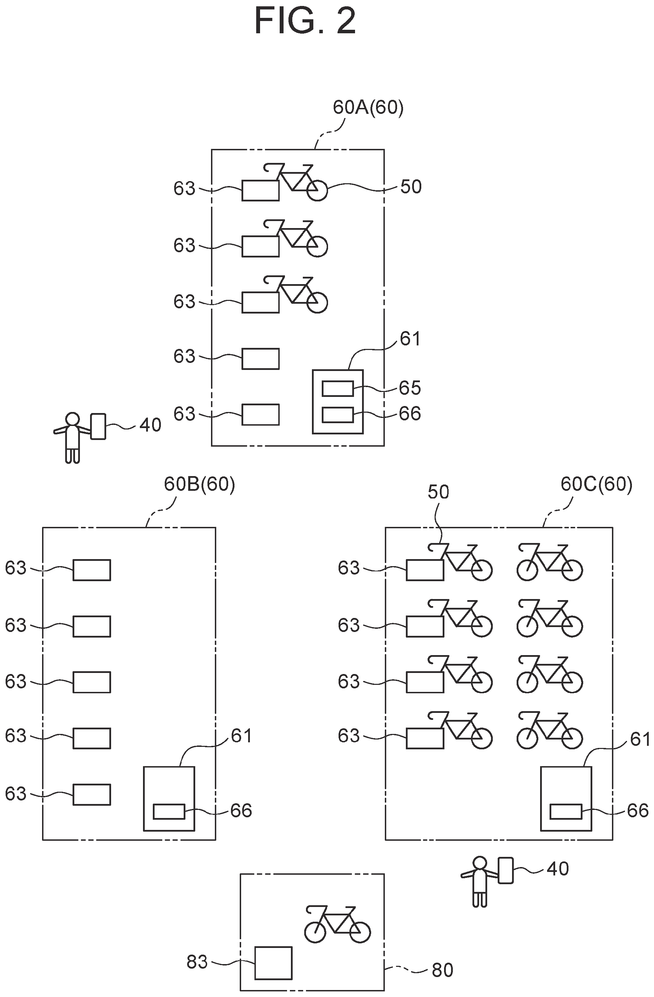

FIG. 1 is a block diagram showing a configuration of the information processing system 1 according to the present embodiment. The information processing system 1 according to the present embodiment includes a management server 10, the moving objects 50, the ports 60, and a power storage facility 80. The management server 10 is communicably connected to the user terminals 40, the moving objects 50, the ports 60, and the power storage facility 80 via a communication network 70 such as Internet lines. The user terminals 40 are communicably connected to the management server 10 via the communication network 70 such as Internet lines. Alternatively, the user terminals 40 may be able to transmit/receive signals to/from the moving objects 50, the ports 60, and the power storage facility 80 according to bluetooth (registered trademark) or the like. The transmission/reception of signals according to bluetooth (registered trademark) or the like may be able to be performed also between the moving objects 50 and the ports 60 and between the moving objects 50 and the power storage facility 80. In the present embodiment, the management server 10, the user terminals 40, the moving objects 50, the ports 60, and the power storage facility 80 are communicably connected to each other directly or indirectly. FIG. 2 is a schematic diagram showing the moving objects 50, the ports 60, the user terminals 40 possessed by the users, and the power storage facility 80 in the present embodiment. Each of the constituents of the information processing system 1 will be described below.

### <Configuration of Management Server 10>

The management server 10 is, for example, a server that can be used via the communication network 70 such as Internet lines. The management server 10 may be provided in a state where a virtual dedicated server is built in a physical server that can be accessed via the Internet. The management server 10 has a control unit 12, a storage unit 30, and a communication unit 32. The control unit 12 is implemented by a microcomputer including a CPU and a semiconductor memory and controls operation of the management server 10. More specifically, the control unit 12 executes a program stored in the storage unit 30 to function as destination setting means 14, guidance transmission means 16, movement information acceptance means 18, unlocking means 20, movement completion ascertainment means 22, reward giving means 24, and route guiding means 26.

The destination setting means 14 sets information about a destination to which any of the moving objects 50 is to be moved (specifically, any of the ports 60 provided with a power storage device 65 or the power storage facility 80). The guidance transmission means 16 transmits, to each of the user terminals 40, a guidance indicating that the moving object 50 is to be moved. The movement information acceptance means 18 accepts information in relation to any of the users having moved the moving object 50 provided with a power generator 56 configured to charge a battery 55 through movement, the information being accepted from the moving object 50 or the user terminal 40 and being information about a charging amount by which the battery 55 of the moving object 50 has been charged during the movement. The information about the charging amount of the battery 55 includes at least one of: an amount of a change in an amount of remaining power in the battery 55; and a movement distance of the moving object 50. The unlocking means 20 transmits unlocking information to the moving object 50 so as to enable only a user having made a reservation for moving the moving object 50 to move the moving object 50. The movement completion ascertainment means 22 ascertains, based on movement completion information transmitted from the user terminal 40, the moving object 50, or the port 60, that movement of the moving object 50 has been completed. The reward giving means 24 gives, based on the information about the charging amount, a reward to the user having moved the moving object 50. The route guiding means 26 transmits, to the user terminal 40, guiding information about a movement route from a present position to the destination of the moving object 50. Functions of these respective means 14, 16, 18, 20, 22, 24, and 26 will be described later in detail.

The program to be executed by the control unit 12 is not limited to the program stored in the storage unit 30. As the program to be executed by the control unit 12, a program transmitted from an external device via the communication unit 32 to the control unit 12, a program stored in a storage medium such as a USB memory mounted to the management server 10, a program stored in a server (e.g., a cloud server) or the like different from the management server 10, or the like may be used.

The storage unit 30 is implemented by a hard disk drive (HDD), a random access memory (RAM), a read only memory (ROM), a solid state drive (SSD), or the like. Various programs including the program to be executed by the control unit 12 are stored in the storage unit 30. In addition, pieces of information are stored in the storage unit 30. The pieces of information include: information about the moving objects 50 (specific examples of which are model information, positional information, an amount of remaining power in the battery 55, and the like for each of identification numbers of the respective moving objects 50); information about the ports 60 (specifically, positional information, the number of parking racks 63, presence/absence of the power storage device 65, a target minimum number, a target maximum number, and the like for each of pieces of identification information about the respective ports 60); information about the user terminals 40 (identification information about the user terminals 40, user account information for an app installed in the user terminals 40, and the like); an amount of remaining power in a power storage device 83 of the power storage facility 80; and the like. The pieces of information stored in the storage unit 30 will be described later in detail.

The communication unit 32 is, for example, a wired local area network (LAN) module, a wireless LAN module, or the like and includes an interface for performing wired or wireless communication. That is, the communication unit 32 is implemented by a communication interface configured to perform communication with another device via the communication network 70.

### <Configuration of User Terminal 40>

A configuration of each of the user terminals 40 will be described with reference to FIG. 1. The user terminal 40 is a smartphone, a tablet computer, a personal computer, or the like possessed by the corresponding user who intends to use any of the moving objects 50. The user terminal 40 has a control unit 42, a display unit 43, an operation unit 44, a storage unit 45, and a communication unit 46, and these constituents are electrically connected.

The control unit 42 includes a CPU, a RAM, a ROM, and the like and is configured to perform various kinds of information processing based on programs and data.

The display unit 43 is, for example, a display and is used for displaying an input, an output, and the like. As the display, a publicly-known liquid crystal display or the like may be used. The operation unit 44 is a keyboard, an operation key, or the like and is for achieving the above input. Alternatively, a touch panel display that functions as both the display unit 43 and the operation unit 44 may be used. Hereinafter, the input to be achieved with the operation unit 44 is assumed to be a touch input as an example.

The storage unit 45 is implemented by, for example, an auxiliary storage device such as an HDD or an SSD and stores various data and programs for driving the user terminal 40. The programs are for performing various kinds of processing described later. The control unit 42 is configured to interpret and execute the programs to perform various kinds of processing.

The communication unit 46 is, for example, a wired local area network (LAN) module, a wireless LAN module, or the like and includes an interface for performing wired or wireless communication. That is, the communication unit 46 is implemented by a communication interface configured to perform communication with another device via the communication network 70.

In a specific hardware configuration of the user terminal 40, constituents may be omitted, substituted, and added as appropriate according to the manner of implementation. For example, the control unit 42 may include a plurality of processors. The control unit 42 may be implemented by an FPGA. The storage unit 45 may be implemented by the RAM and the ROM included in the control unit 42. The user terminal 40 may be a terminal dedicated to this system, or a generally-used smartphone or the like in which the above programs are installed may be used.

In the user terminal 40, the following processing is performed. That is, the control unit 42 of the user terminal 40 loads any of the programs stored in the storage unit 48 to the RAM and then interprets and executes the program by the CPU.

### <Configuration of Moving Object 50>

Each of the moving objects 50 is, for example, a vehicle such as a bicycle. By being pedaled by any of the users, the moving object 50 generates drive force and transmits the force to wheels to move forward. As such a moving object 50, a moving object of a type in which an electrically-driven machine 54 such as an electric motor is mounted to provide supplemental motive force as in an electrically-assisted bicycle is used. In addition, the moving object 50 is mounted with the power generator 56. By the user pedaling, the power generator 56 generates power and charges the battery 55.

An identification number is assigned to each of the moving objects 50. For example, a sticker on which a barcode or a two-dimensional code indicating the identification number of the moving object 50 is printed may be pasted on a frame or the like of the moving object 50, or an IC tag or the like in which the identification number of the moving object 50 is stored may be attached to the frame or the like of the moving object 50.

A configuration of the moving object 50 will be described with reference to FIG. 1. The moving object 50 has a control unit 52, a lock unit 53, the electrically-driven machine 54, the battery 55, the power generator 56, a GPS 57, a reading unit 58, and a communication unit 59, and these constituents are electrically connected.

The control unit 52 includes a CPU, a RAM, a ROM, and the like and is configured to perform various kinds of information processing based on programs and data. The lock unit 53 is for fixing a wheel to the frame of the bicycle to prevent the wheel from rotating. As the lock unit 53, any of publicly-known various lock units is used. Alternatively, a moving object provided with no lock unit 53 may be used as the moving object 50. The electrically-driven machine 54 is disposed at a hub (a center portion of a wheel) or a crankset (a combination of the pedals and a crank) of the bicycle. As the electrically-driven machine 54, a hub motor, a mid-drive motor, or the like is used. The hub motor is directly incorporated into the hub of the wheel and provides a drive force. The mid-drive motor is disposed near the crankset and transmits a force via a chain. Power is supplied from the battery 55 to the electrically-driven machine 54. The battery 55 is incorporated into the frame of the moving object 50, and characteristics such as a capacity and a charging time differ depending on the type of the battery 55. In general, a higher battery capacity enables traveling over a longer distance but leads to a problem in that the moving object 50 becomes heavier owing to the weight of the battery 55.

The power generator 56 is for generating power by the user pedaling. The battery 55 is charged with the power generated by the power generator 56. As such a power generator 56, for example, a power generator disclosed in Japanese Laid-Open Patent Publication No. 2022-182811 or the like has been known. The GPS 57 is for detecting a present position of the moving object 50. The present position of the moving object 50 can be accurately tracked or traveling data can be collected based on a result of the detection by such a GPS 57. The moving object 50 does not necessarily have to be provided with the GPS 57. A moving object 50 mounted with no GPS 57 may be used. The reading unit 58 includes, for example, a camera or the like and reads a two-dimensional code displayed by the display unit 43 of the user terminal 40. By the reading unit 58 reading the two-dimensional code displayed by the display unit 43 of the user terminal 40, the wheel locked by the lock unit 53 is unlocked.

The communication unit 59 is, for example, a wired local area network (LAN) module, a wireless LAN module, or the like and includes an interface for performing wired or wireless communication. That is, the communication unit 59 is implemented by a communication interface configured to perform communication with another device via the communication network 70. Specifically, information about the amount of remaining power in the battery 55, information about the present position of the moving object 50 acquired by the GPS 57, and information about the two-dimensional code read by the reading unit 58 are transmitted from the moving object 50 via the communication network 70 to the management server 10 by the communication unit 59 in a state of being associated with the identification number of the moving object 50. In addition, an unlocking command (unlocking information) for the wheel locked by the lock unit 53 is transmitted from the management server 10 via the communication network 70 to the control unit 52 by the communication unit 59.

### <Configuration of Port 60>

As shown in FIG. 2, the ports 60 are for parking therein one or a plurality of the moving objects 50 such as bicycles and are provided in a specified bicycle parking lot, a specified area, or the like. For each of the ports 60, the number of the moving objects 50 that can be parked therein is preset. The port 60 is provided with one or a plurality of the parking racks 63, and the moving objects 50 can be parked at the parking racks 63. Each of the users who desires to use any of the moving objects 50 unlocks a wheel of the moving object 50 parked at the corresponding parking rack 63 in the port 60, the wheel having been locked by the lock unit 53. Consequently, the user can borrow this moving object 50. Also, the user having borrowed the moving object 50 returns the moving object 50 to the original port 60 or moves the moving object 50 to another one of the ports 60 to return the moving object 50.

A configuration of the port 60 will be described with reference to FIG. 1 and FIG. 2. The port 60 has a control unit 62, a detection unit 64, the power storage device 65, a display unit 66, and a communication unit 67, and these constituents are electrically connected.

The control unit 62 includes a CPU, a RAM, a ROM, and the like and is configured to perform various kinds of information processing based on programs and data. The detection unit 64 is provided to each of the parking racks 63. When any of the moving objects 50 is parked at the parking rack 63, the detection unit 64 detects the identification number of this moving object 50. There are various methods as methods for detecting the identification number of the moving object 50 by the detection unit 64. For example, a barcode or a two-dimensional code indicating the identification number of the moving object 50 may be provided to the moving object 50, and, when the moving object 50 is parked in the port 60, the detection unit 64 as a code reading unit may read the barcode or the two-dimensional code of this moving object 50. Alternatively, the detection unit 64 may read the identification number of this moving object 50 from an IC tag or the like in which the identification number of the moving object 50 is stored.

The power storage device 65 is for charging the batteries 55 of the moving objects 50 parked in the port 60 with power. Also, when any of the moving objects 50 is parked in the port 60, power which has been generated by the power generator 56 and with which the battery 55 has been charged may be transmitted to the power storage device 65. The ports 60 include a port in which the power storage device 65 is disposed and ports in which the power storage device 65 is not disposed. The display unit 66 displays various pieces of information for the users such as the number of the moving objects 50 parked in the port 60 and the number of leasable ones of the moving objects 50.

The communication unit 67 is, for example, a wired local area network (LAN) module, a wireless LAN module, or the like and includes an interface for performing wired or wireless communication. That is, the communication unit 67 is implemented by a communication interface configured to perform communication with another device via the communication network 70. Specifically, pieces of information such as information about a result of detection by the detection unit 64 and an amount of remaining power in the power storage device 65 are transmitted from the port 60 to the management server 10 by the communication unit 67. In addition, information such as content to be displayed on the display unit 66 is transmitted from the management server 10 via the communication network 70 to the control unit 62 by the communication unit 67.

A lock unit (not shown) for locking the moving object 50 may be provided to each of the parking racks 63 of the port 60 instead of the lock unit 53 provided to the moving object 50 or in addition to the lock unit 53 provided to the moving object 50. In this case, the unlocking means 20 transmits unlocking information to the port 60 so as to enable only the user having made the reservation for disposing the moving object 50 to move the moving object 50. Consequently, the lock done by the lock unit provided to the corresponding parking rack 63 of the port 60 is unlocked so as to enable the user to move the moving object 50 parked at the parking rack 63.

### <Configuration of Power Storage Facility 80>

The power storage facility 80 is for supplying power to an adjacent commercial facility or the like. As shown in FIG. 1, the power storage facility 80 has a control unit 82, the power storage device 83, and a communication unit 84, and these constituents are electrically connected.

The control unit 82 includes a CPU, a RAM, a ROM, and the like and is configured to perform various kinds of information processing based on programs and data. In the power storage device 83, power to be supplied to the adjacent commercial facility or the like is accumulated. When any of the moving objects 50 is parked in the power storage facility 80, power which has been generated by the power generator 56 of this moving object 50 and with which the battery 55 has been charged is transmitted to the power storage device 83 of the power storage facility 80. In this manner, when the user pedals the moving object 50 such as a bicycle to move the moving object 50 so that the power generator 56 generates power, the power obtained by the power generator 56 can be stored in the power storage device 65 of the power storage facility 80 in exchange for a predetermined payment. The communication unit 84 is, for example, a wired local area network (LAN) module, a wireless LAN module, or the like and includes an interface for performing wired or wireless communication. That is, the communication unit 84 is implemented by a communication interface configured to perform communication with another device via the communication network 70. Specifically, information such as an amount of remaining power in the power storage device 65 is transmitted from the power storage facility 80 to the management server 10 by the communication unit 84.

### <Operations of Information Processing System 1>

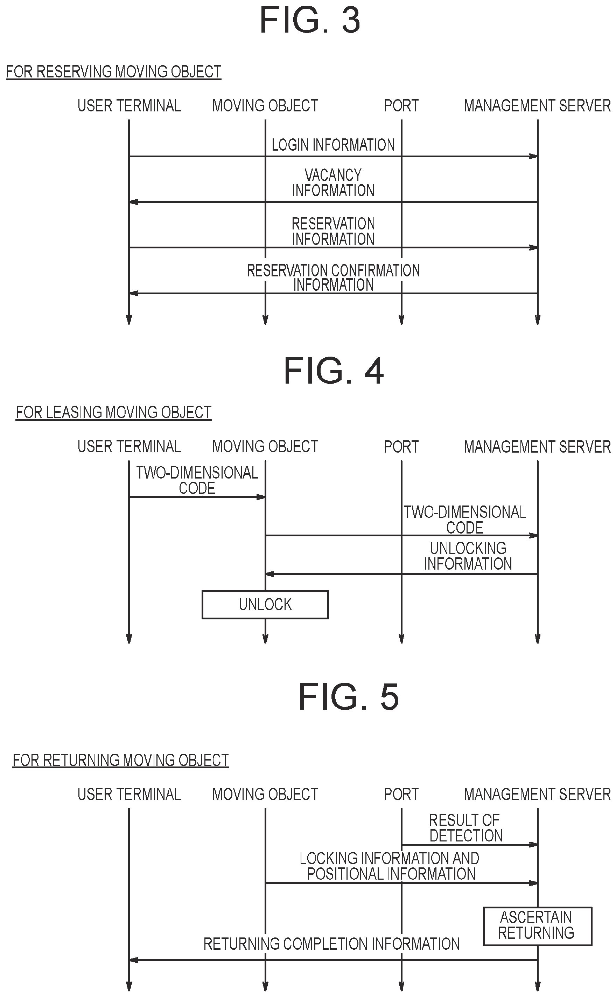

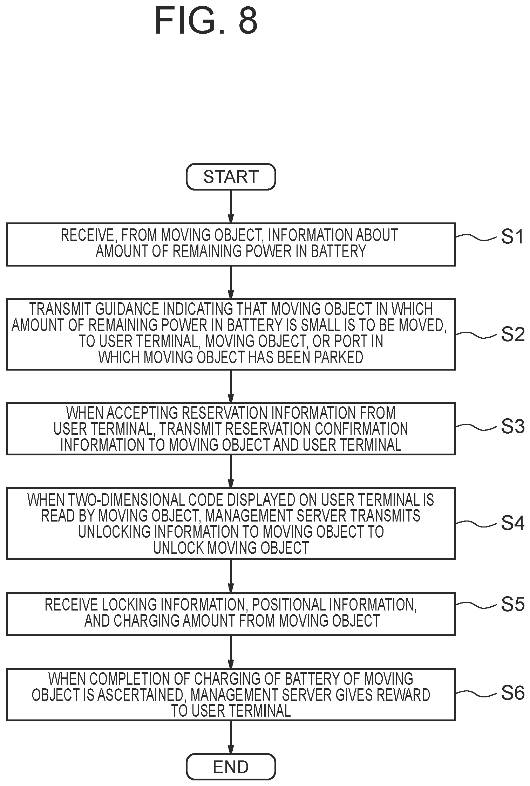

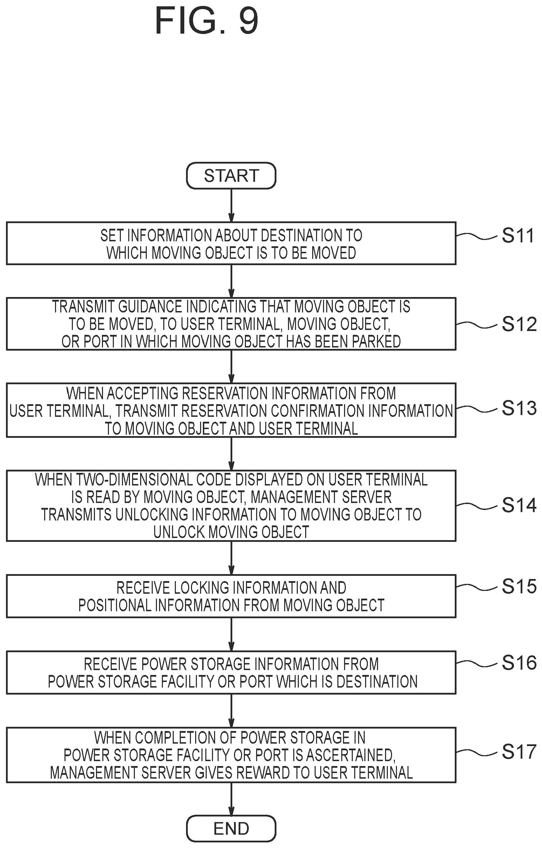

Next, operations of the information processing system 1 according to the present embodiment will be described with reference to the charts shown in FIG. 3 to FIG. 7 and the flowcharts shown in FIG. 8 and FIG. 9. The operations of the information processing system 1 described below are performed by the control unit 12 of the management server 10 executing the program stored in the storage unit 30. Also, a user who desires to utilize the sharing service related to the information processing system 1 according to the present embodiment can install a predetermined application (hereinafter, referred to as an app) from an online store, a website of a management company of the sharing service, or the like and can input personal information such as a name and contact information to perform membership registration. Consequently, the user can, for example, reserve, borrow, or return any of the moving objects 50.

Firstly, an operation for reserving a moving object 50 will be described with reference to the chart shown in FIG. 3. Each of the users who desires to use a moving object 50 first reserves any of the moving objects 50 parked in the ports 60 located nearby. Such a reservation for the moving object 50 can be performed by using the user terminal 40. Specifically, when a login to the app of this service is performed by using the user terminal 40, a map and the ports 60 are displayed on the display unit 43 of the user terminal 40. In addition, the number of leasable ones of the moving objects 50 parked in each of the ports 60 (vacancy information) is displayed on the display unit 43 of the user terminal 40 based on information detected by the detection unit 64 of the port 60. Then, the user uses the operation unit 44 of the user terminal 40 to specify any of the ports 60. Consequently, in a case where the number of the leasable moving objects 50 parked in this port 60 is 1 or more, pieces of information such as numbers assigned to the parking racks 63 at which the moving objects 50 have been parked, the identification numbers of the moving objects 50, and the amounts of remaining power in the batteries 55 thereof are displayed on the display unit 43 of the user terminal 40 as detailed information about the leasable moving objects 50.

When the user uses the user terminal 40 to specify any of the moving objects 50 that is desired to be reserved, reservation information (specifically, the number assigned to the parking rack 63 at which the moving object 50 has been parked, the identification number of the moving object 50, and the like) is transmitted from the user terminal 40 to the management server 10. Then, the control unit 12 of the management server 10 makes a reservation for leasing the moving object 50 to this user. Thereafter, pieces of information such as the position of the port 60, the number assigned to the parking rack 63 that is in the port 60 and at which the moving object 50 has been parked, and the identification number of the moving object 50 parked in the port 60, information about a two-dimensional code for unlocking the lock done by the lock unit 53 of the moving object 50, and the like are transmitted from the management server 10 to the user terminal 40 as reservation confirmation information. Thus, the operation for reserving the moving object 50 in the information processing system 1 is completed.

Next, an operation for leasing the moving object 50 will be described with reference to the chart shown in FIG. 4. The user having reserved the moving object 50 moves to the port 60 in which this moving object 50 has been parked. Then, the reading unit 58 of the moving object 50 parked at the parking rack 63 having the specified number is caused to read the two-dimensional code displayed on the display unit 43 of the user terminal 40. The information about the two-dimensional code read by the reading unit 58 is transmitted from the moving object 50 to the management server 10. When receiving the information about the two-dimensional code from the moving object 50 for which a reservation has been made in advance by the user, the control unit 12 of the management server 10 transmits unlocking information to the moving object 50. As a result, the mobile unit 50 is leased, and the user is able to ride the mobile unit 50 and move around. Thus, the operation for leasing the moving object 50 in the information processing system 1 is completed.

Next, an operation for returning the moving object 50 will be described with reference to the chart shown in FIG. 5. The user who desires to return the moving object 50 moves to any of the ports 60. The port 60 may be the original port 60 in which the moving object 50 has been leased or may be another one of the ports 60. When the moving object 50 is parked at any of the parking racks 63 in the port 60, the detection unit 64 reads the identification number of this moving object 50, and a detection result obtained through the reading is transmitted from the port 60 to the management server 10. Then, the user fixes a wheel to the frame of the moving object 50 by the lock unit 53. Thereafter, the user uses the operation unit 44 of the user terminal 40 to press a return button displayed on the display unit 43. Consequently, locking information about the moving object 50 and positional information about the moving object 50 are transmitted from the moving object 50 to the management server 10. When ascertaining, based on the identification number of the moving object 50 transmitted from the port 60 and the locking information and the positional information about the moving object 50 transmitted from the moving object 50, that the moving object 50 has been returned, the control unit 12 of the management server 10 transmits returning completion information to the user terminal 40. Consequently, information indicating that returning of the moving object 50 has been completed is displayed on the display unit 43 of the user terminal 40. Thus, the operation for returning the moving object 50 in the information processing system 1 is completed.

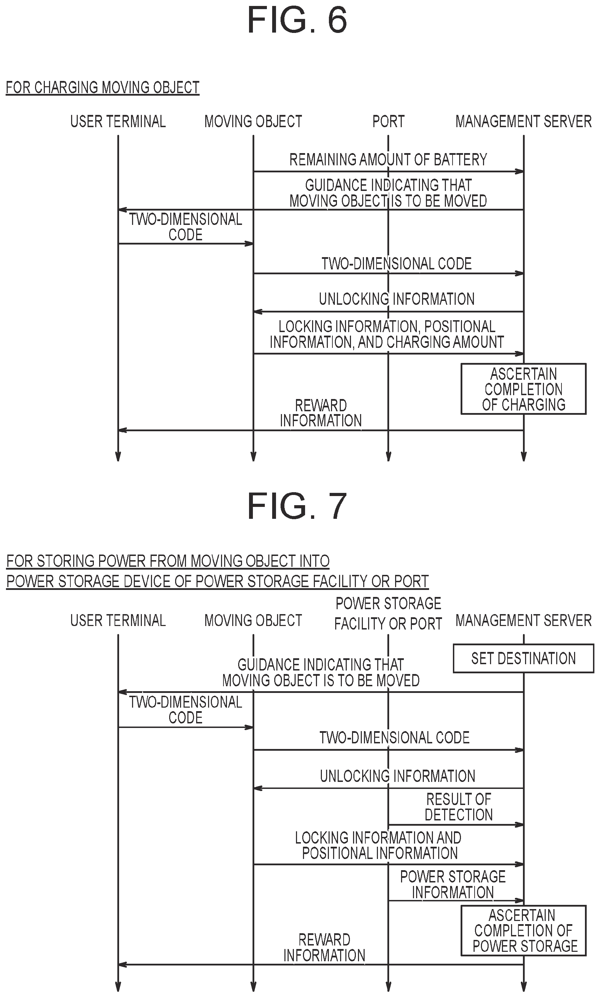

In addition, in a case where the business operator desires to charge the batteries 55 of the moving objects 50, the information processing system 1 according to the present embodiment enables each of the users to charge any of the batteries 55 of the moving objects 50 by giving a reward to the user. Such an operation for charging the battery 55 of the moving object 50 will be described with reference to the chart shown in FIG. 6 and the flowchart shown in FIG. 8.

The management server 10 accepts, from each of the moving objects 50, information about the amount of remaining power in the battery 55 (step S1 in FIG. 8). The guidance transmission means 16 determines whether or not the amount of remaining power in the battery 55 of each of the moving objects 50 is smaller than a predetermined threshold value. The guidance transmission means 16 simultaneously transmits a guidance indicating that moving objects 50 in which the amounts of remaining power in the batteries 55 are smaller than the predetermined threshold value are to be moved, the guidance being transmitted to the user terminals 40, the moving objects 50 to be moved, or the port 60 in which the moving objects 50 to be moved have been parked (step S2 in FIG. 8). In a case where such a guidance is simultaneously transmitted to each of the user terminals 40, information about a list of the moving objects 50 to be moved (specifically, the identification numbers of the moving objects 50 to be moved, positional information about the port 60 in which the moving objects 50 have been parked, the amounts of remaining power in the batteries 55 of the moving objects 50, and the like) is displayed on the display unit 43 of the user terminal 40. For example, the message "The amounts of remaining power in the batteries 55 of the moving objects 50 in the port 60 at a position A are small. So, please move the moving objects 50 to generate power." is displayed on the display unit 43 of the user terminal 40. Then, the user uses the user terminal 40 to select, as a moving object 50 to be moved by himself/herself, a moving object 50 among the plurality of moving objects 50 displayed on the display unit 43. Consequently, reservation information is transmitted from the user terminal 40 to the management server 10. When accepting the reservation information from the user terminal 40, the control unit 12 reserves the moving object 50 and transmits reservation confirmation information to the moving object 50 and the user terminal 40 (step S3 in FIG. 8).

Meanwhile, in a case where the guidance indicating that the moving objects 50 in which the amounts of remaining power in the batteries 55 are smaller than the predetermined threshold value are to be moved is transmitted to each of the moving objects 50 by the guidance transmission means 16, the guidance indicating that this moving object 50 is to be moved is displayed on a monitor (not shown) or the like provided to the moving object 50. For example, the message "The amount of remaining power in the battery 55 of this moving object 50 is small. So, please move the moving object 50 to generate power." is displayed on the monitor or the like provided to the moving object 50. Then, the user uses an operation button or the like provided to any of the moving objects 50 to input a command indicating that the moving object 50 is to be moved. Consequently, reservation information is transmitted from the moving object 50 to the management server 10. When accepting the reservation information from the moving object 50, the control unit 12 reserves the moving object 50 and transmits reservation confirmation information to the moving object 50 and the user terminal 40. Meanwhile, in a case where the guidance indicating that the moving objects 50 in which the amounts of remaining power in the batteries 55 are smaller than the predetermined threshold value are to be moved is transmitted to the port 60 by the guidance transmission means 16, information about the moving objects 50 to be moved (specifically, guidance information such as the identification numbers of the moving objects 50 to be moved and the amounts of remaining power in the batteries 55 of the moving objects 50) is displayed on the display unit 66 or the like provided to the port 60. For example, the message "The amounts of remaining power in the batteries 55 of the moving objects 50 parked in this port 60 are small. So, please move the moving objects 50 to generate power." is displayed on the display unit 66 or the like provided to the port 60. Then, the user uses an operation board or the like provided to the port 60 to input a command indicating that any of the moving objects 50 parked in this port 60 is to be moved. Consequently, reservation information is transmitted from the port 60 to the management server 10. When accepting the reservation information from the port 60, the control unit 12 reserves the moving object 50 and transmits reservation confirmation information to the moving object 50 and the user terminal 40.

The reservation confirmation information transmitted to the moving object 50 includes: identification information about the user terminal 40 on which a reservation for moving this moving object 50 has been made; information about an account of the user possessing the user terminal 40; and the like. When such reservation confirmation information is transmitted to the moving object 50, only the user having made the movement reservation becomes able to unlock the lock done by the lock unit 53. Meanwhile, the reservation confirmation information transmitted to the user terminal 40 includes: information about a two-dimensional code for unlocking the moving object 50 for which the movement reservation has been made (unlocking information); the identification number of this moving object 50; positional information about this moving object 50 acquired by the GPS 57; information about the port 60 in which this moving object 50 has been parked; the amount of remaining power in the battery 55 of this moving object 50; and the like. Such reservation confirmation information is displayed on the display unit 43 of the user terminal 40. Consequently, the user becomes able to ascertain, on a display screen of the display unit 43, the position of the moving object 50 to be moved henceforth.

Thereafter, the user moves to the port 60 in which the moving object 50 to be moved has been parked, the display unit 43 of the user terminal 40 is caused to display an unlocking two-dimensional code, and the reading unit 58 of the moving object 50 to be relocated is caused to read this two-dimensional code. Consequently, information about the two-dimensional code read by the reading unit 58 is transmitted from the moving object 50 to the management server 10. Then, in a case where the information about the two-dimensional code transmitted from the moving object 50 is information suitable for unlocking this moving object 50, the unlocking means 20 of the management server 10 transmits unlocking information to the moving object 50 which is a transmission source. Consequently, the wheel locked by the lock unit 53 is unlocked so as to enable the user to move the moving object 50 (step S4 in FIG. 7).

Thereafter, the user moves the moving object 50 through pedaling. Consequently, the power generator 56 generates power and charges the battery 55. When the battery 55 is sufficiently charged, the user parks the moving object 50 in the original port 60 or another one of the ports 60. Consequently, the detection unit 64 provided to the corresponding parking rack 63 in the port 60 detects identification information about this moving object 50. A result of the detection by the detection unit 64 is transmitted as a piece of movement completion information from the port 60 to the management server 10. In addition, when the user locks a wheel of the moving object 50 by the lock unit 53 to lock the moving object 50 in the port 60, locking information, positional information about the moving object 50, and an amount of remaining power in the battery 55 are transmitted as pieces of movement completion information from the moving object 50 to the management server 10 (step S5 in FIG. 8). In addition, the movement information acceptance means 18 accepts information about a charging amount of the battery 55 from the moving object 50. Here, the information about the charging amount of the battery 55 includes at least one of: information about a movement distance of the moving object 50 measured by the GPS 57; and an amount of an increase in the amount of the remaining power in the battery 55. Alternatively, after the moving object 50 is parked in the port 60, the pieces of movement completion information and the information about the charging amount of the battery 55 may be transmitted from the user terminal 40 to the management server 10 by the user using the user terminal 40 to input information indicating that the moving object 50 has been parked in the port 60.

The movement completion ascertainment means 22 ascertains, based on the pieces of movement completion information (specifically, the result of the detection by the detection unit 64, the locking information about the moving object 50, the positional information about the moving object 50, and the like), that the moving object 50 has been moved to the port 60. The movement completion ascertainment means 22 may ascertain, based on the result of the detection by the detection unit 64 transmitted from the port 60 to the management server 10 alone, that the moving object 50 has been parked in the port 60. Alternatively, the movement completion ascertainment means 22 may ascertain, based on the locking information about the moving object 50 and the positional information about the moving object 50 transmitted from the moving object 50 to the management server 10 alone, that the moving object 50 has been parked in the port 60. Alternatively, the movement completion ascertainment means 22 may ascertain, based on both the result of the detection by the detection unit 64 transmitted from the port 60 to the management server 10 and the locking information about the moving object 50 and the positional information about the moving object 50 transmitted from the moving object 50 to the management server 10, that the moving object 50 has been parked in the port 60. As methods in which the movement completion ascertainment means 22 ascertains that the moving object 50 has been parked in the port 60, various methods may be employed in the present embodiment.

When the movement completion ascertainment means 22 ascertains that the moving object 50 has been parked in the port 60, the reward giving means 24 gives a reward to the user having moved the moving object 50 (step S6 in FIG. 8). Specifically, the reward giving means 24 gives, as the reward, a gift (a specific example of which is "points") usable in the predetermined app installed in the user terminal 40 possessed by the user having relocated the moving object 50. The gift enables the user to borrow any of the moving objects 50 for free or at a price lower than an original price next time, for example. The reward to be given to the user by the reward giving means 24 is not limited to such a gift usable in the predetermined app. In another example, a service related to traveling with use of the moving objects 50 may be given instantaneously and transmitted to the user terminal 40, for example. Other various forms of rewards are each conceivable as the reward to be given to the user by the reward giving means 24.

The reward to be given to the user by the reward giving means 24 is determined according to the information about the charging amount of the battery 55 of the moving object 50 accepted by the movement information acceptance means 18. As described above, the information about the charging amount of the battery 55 includes at least one of: the amount of a change in the amount of remaining power in the battery 55; and the movement distance of the moving object 50. The reason for this is as follows. That is, in a case where the moving object 50 is, for example, a bicycle, a larger extent of pedaling of the bicycle leads to a larger amount of charging by the power generator 56, and thus, in general, there is a correlation between the movement distance of the moving object 50 and the amount of charging by the power generator 56. The movement distance of the moving object 50 may be calculated by providing a sensor for detecting the rotation speed of a tire of the bicycle. Consequently, the user gets to move the moving object 50 over a longer distance in order to obtain a higher reward, whereby the charging amount of the battery 55 of the moving object 50 can be increased.

In addition, in the information processing system 1 according to the present embodiment, after the battery 55 of the moving object 50 is charged, the power accumulated in this battery 55 can be stored into the power storage device 65 of the port 60 or the power storage device 83 of the power storage facility 80. Such a power storage operation for the power storage device 65 of the port 60 or the power storage device 83 of the power storage facility 80 will be described with reference to the chart shown in FIG. 7 and the flowchart shown in FIG. 9.

First, the destination setting means 14 sets information about a destination to which any of the moving objects 50 is to be moved (step S11 in FIG. 9). Here, the destination setting means 14 sets, as the destination to which the moving object 50 is to be moved, the port 60 in which the amount of remaining power in the power storage device 65 is a predetermined threshold value or less or the power storage facility 80 in which the amount of remaining power in the power storage device 83 is a predetermined threshold value or less.

Next, the guidance transmission means 16 transmits a guidance indicating that the moving object 50 is to be moved to the destination (specifically, the port 60 or the power storage facility 80) set by the destination setting means 14, the guidance being transmitted to at least one of the user terminals 40, the moving object 50 to be moved to the destination, or the port 60 in which the moving object 50 to be moved to the destination has been parked (step S12 in FIG. 9). Here, the guidance transmission means 16 sets, as the moving object 50 to be moved to the destination, a moving object in which the amount of remaining power in the battery 55 is a predetermined threshold value or more. The guidance transmission means 16 may transmit such a guidance to each of the user terminals 40 simultaneously or to a specific one of the user terminals 40 alone. Specifically, after the above power storage operation for the battery 55 of the moving object 50 is performed by the power generator 56, the guidance transmission means 16 may transmit the guidance to the user terminal 40 of the user having performed the power storage operation for the battery 55.

In a case where the guidance information is transmitted to at least one of the user terminals 40, information about the moving object 50 to be moved to the destination (specifically, identification number of the moving object 50 to be moved to the destination, positional information about the port 60 in which the moving object 50 has been parked, the amount of remaining power in the battery 55 of the moving object 50, information about the destination, or the like) is displayed on the display unit 43 of this user terminal 40. For example, the message "Please move the moving object 50 in the port 60 at a position A to the power storage facility 80 at a position B." is displayed on the display unit 43 of the user terminal 40. Then, the user uses the user terminal 40 to select the moving object 50 to be moved to the destination by himself/herself on the user terminal 40. Consequently, reservation information is transmitted from the user terminal 40 to the management server 10. When accepting the reservation information from the user terminal 40, the control unit 12 reserves the moving object 50 and transmits reservation confirmation information to the moving object 50 and the user terminal 40 (step S13 in FIG. 9).

Meanwhile, in a case where the guidance transmission means 16 transmits, to the moving object 50, the guidance indicating that the moving object 50 is to be moved to the destination set by the destination setting means 14, the guidance indicating that this moving object 50 is to be moved to the destination is displayed on the monitor (not shown) or the like provided to the moving object 50. Then, any of the users uses the operation button or the like provided to the moving object 50 to input a command indicating that the moving object 50 is to be moved. Consequently, reservation information is transmitted from the moving object 50 to the management server 10. When accepting the reservation information from the moving object 50, the control unit 12 reserves the moving object 50 and transmits reservation confirmation information to the moving object 50 and the corresponding user terminal 40. Meanwhile, in a case where the guidance transmission means 16 transmits, to the port 60, the guidance indicating that the moving object 50 is to be moved to the destination set by the destination setting means 14, the information about the moving object 50 to be moved (specifically, guidance information such as the identification number of the moving object 50 to be moved or the amount of remaining power in the battery 55 of the moving object 50, or the information about the destination) is displayed on the display unit 66 or the like provided to the port 60. Then, any of the users uses the operation board or the like provided to the port 60 to input a command indicating that the moving object 50 parked in this port 60 is to be moved. Consequently, reservation information is transmitted from the port 60 to the management server 10. When accepting the reservation information from the port 60, the control unit 12 reserves the moving object 50 and transmits reservation confirmation information to the moving object 50 and the corresponding user terminal 40.

The reservation confirmation information transmitted to the moving object 50 includes: identification information about the user terminal 40 on which a reservation for moving the moving object 50 to the destination has been made; information about an account of the user possessing the user terminal 40; information about the destination (specifically, the port 60 or the power storage facility 80) to which the moving object 50 is to be moved; and the like. When such reservation confirmation information is transmitted to the moving object 50, the lock done by the lock unit 53 becomes unable to be unlocked by a user terminal 40 other than the user terminal 40 on which the movement reservation has been made. Meanwhile, the reservation confirmation information transmitted to the user terminal 40 includes: information about a two-dimensional code for unlocking the moving object 50 for which the movement reservation has been made (unlocking information); the identification number of this moving object 50; positional information about this moving object 50 acquired by the GPS 57; information about the port 60 in which this moving object 50 has been parked; the amount of remaining power in the battery 55 of this moving object 50; information about the destination to which this moving object 50 is to be moved; and the like. Such reservation confirmation information is displayed on the display unit 43 of the user terminal 40. Consequently, the user becomes able to ascertain, on the display screen of the display unit 43, information about the position of the moving object 50 to be moved to the destination and information about a position to which the moving object 50 is to be moved.

After the identification information about the moving object 50 to be moved to the destination and the information about the destination (i.e., reservation confirmation information) are transmitted from the management server 10 to the user terminal 40, the route guiding means 26 transmits, to the user terminal 40, guiding information about a movement route from a present position to the destination of the moving object 50, the present position being based on a result of detection by the GPS 57. Consequently, the movement route from the present position to the destination of the moving object 50 is displayed on the display unit 43 of the user terminal 40, whereby the user becomes able to more assuredly move the moving object 50 to the destination while viewing the display unit 43 of the user terminal 40.

Thereafter, the user moves to the port 60 in which the moving object 50 to be moved to the destination has been parked, the display unit 43 of the user terminal 40 is caused to display an unlocking two-dimensional code, and the reading unit 58 of the moving object 50 to be moved to the destination is caused to read this two-dimensional code. Consequently, information about the two-dimensional code read by the reading unit 58 is transmitted from the moving object 50 to the management server 10. Then, in a case where the information about the two-dimensional code transmitted from the moving object 50 is information suitable for unlocking this moving object 50, the unlocking means 20 of the management server 10 transmits unlocking information to the moving object 50 which is a transmission source. Consequently, the wheel locked by the lock unit 53 is unlocked so as to enable the user to move the moving object 50 to the destination (step S14 in FIG. 9).

Thereafter, the user moves the moving object 50 to the destination and parks the moving object 50 at this destination. Consequently, power accumulated in the battery 55 of the moving object 50 is stored into the power storage device 65 of the port 60 or the power storage device 83 of the power storage facility 80 in the port 60 or the power storage facility 80. In a case where the destination is the port 60, when the moving object 50 is parked in the port 60, the detection unit 64 provided to the corresponding parking rack 63 in this port 60 detects identification information about the moving object 50. A result of the detection by the detection unit 64 is transmitted as a piece of movement completion information from the port 60 to the management server 10. In addition, when the user locks a wheel of the moving object 50 by the lock unit 53 to lock the moving object 50 at the destination, locking information and positional information about the moving object 50 are transmitted as pieces of movement completion information from the moving object 50 to the management server 10 (step S15 in FIG. 9). Then, power storage information is transmitted to the management server 10 from the port 60 or the power storage facility 80 which is the destination (step S16 in FIG. 9). Here, the power storage information includes: the identification number of the moving object 50; the amount of power stored in the power storage device 65 of the port 60 or the power storage device 83 of the power storage facility 80; information about the user having moved the moving object 50; and the like. When the power storage information is transmitted to the control unit 12, a predetermined payment is paid to, for example, the business operator of the sharing service related to the moving objects 50 according to the amount of power stored in the power storage device 65 of the port 60 or the power storage device 83 of the power storage facility 80.

In addition, when the movement completion ascertainment means 22 ascertains that the moving object 50 has been moved to the destination, the reward giving means 24 gives a reward to the user having moved the moving object 50 (step S17 in FIG. 9). Specifically, the reward giving means 24 gives, as the reward, a gift (a specific example of which is "points") usable in the predetermined app installed in the user terminal 40 possessed by the user having moved the moving object 50. The gift enables the user to borrow any of the moving objects 50 for free or at a price lower than an original price next time, for example. The reward to be given to the user by the reward giving means 24 is not limited to such a gift usable in the predetermined app. Other various forms of rewards are each conceivable as the reward to be given to the user by the reward giving means 24.

The reward to be given to the user by the reward giving means 24 is determined based on a distance between the position of the destination and a position that the moving object 50 takes when the guidance transmission means 16 transmits the guidance information. Alternatively, the reward to be given to the user by the reward giving means 24 may be determined based on a movement distance of the moving object 50 from a position corresponding to a timing at which the guidance transmission means 16 transmits the guidance information to a position corresponding to a timing at which the destination is reached, the movement distance being measured by the GPS 57 provided to the moving object 50. Also, the reward to be given to the user by the reward giving means 24 may be set such that a reward in the case of moving the moving object 50 without using the electrically-driven machine 54 becomes higher than a reward in the case of moving the moving object 50 by using the electrically-driven machine 54.

In the program, the computer (management server 10), the information processing system 1, and the information processing method according to the present embodiment involving the above configuration, the program causes the computer to function as movement information acceptance means 18 and reward giving means 24. The movement information acceptance means 18 accepts information in relation to a user having moved a moving object 50 provided with a power generator 56 configured to charge a battery 55 through movement, the information being accepted from the moving object 50 or a user terminal 40 and being information about a charging amount by which the battery 55 of the moving object 50 has been charged during the movement. The reward giving means 24 gives a reward to the user having moved the moving object 50. With the program, the computer, the information processing system 1, and the information processing method, the battery 55 of the electrically-driven machine 54 can be charged by the user moving the moving object 50, whereby a burden on the business operator can be mitigated. More detailed description is as follows. Conventionally, in a case where a moving object 50 provided with an electrically-driven machine 54 is used in a sharing service, the business operator needs to charge a battery 55 of the electrically-driven machine 54 each time, and this charging imposes a burden on the business operator. Meanwhile, with the program, the computer, the information processing system 1, and the information processing method involving the above configuration, power generated by the power generator 56 through movement of the moving object 50 by the user can be stored into the battery 55, whereby such a problem can be prevented from arising.

In addition, in the program, the computer (management server 10), the information processing system 1, and the information processing method according to the present embodiment, as described above, the program causes the computer to further function as guidance transmission means 16. The guidance transmission means 16 transmits a guidance indicating that the moving object 50 is to be moved, the guidance being transmitted to the user terminal 40, the moving object 50, or a port 60 in which the moving object 50 has been parked. Consequently, the user can notice the guidance indicating that the moving object 50 is to be moved, whereby the user can cause the power generator 56 to charge the battery 55 by moving the moving object 50.

In addition, in the program, the computer (management server 10), the information processing system 1, and the information processing method according to the present embodiment, as described above, the program causes the computer to further function as destination setting means 14 and guidance transmission means 16. The destination setting means 14 sets information about a destination to which the moving object 50 is to be moved. The guidance transmission means 16 transmits a guidance indicating that the moving object 50 is to be moved to the destination set by the destination setting means 14, the guidance being transmitted to the user terminal 40, the moving object 50, or a port 60 in which the moving object 50 has been parked. Consequently, the user can notice the guidance indicating that the moving object 50 is to be moved to the destination, whereby the user can move the moving object 50 to the destination. The destination setting means 14 sets, as the destination to which the moving object 50 is to be moved, a destination in which a power storage device 65, 83 is provided and in which power can be stored from the battery 55 of the moving object 50 into the power storage device 65, 83. In this case, the user moves the moving object 50 to the destination, and power can be stored from the battery 55 of this moving object 50 into the power storage device 65, 83. The destination is not limited to a place in which the power storage device 65, 83 is provided, such as any of the ports 60 or the power storage facility 80. Any place in which a power storage device is provided may be able to be specified as the destination. Alternatively, any place in which no power storage device is provided may be able to be specified as the destination.

In addition, in the program, the computer (management server 10), the information processing system 1, and the information processing method according to the present embodiment, as described above, the program causes the computer to further function as route guiding means 26. The route guiding means 26 transmits, to the user terminal 40, guiding information about a movement route from a present position to a destination of the moving object 50. In this case, the movement route from the present position to the destination of the moving object 50 is displayed on the display unit 43 of the user terminal 40, whereby the user becomes able to more assuredly move the moving object 50 to the destination while viewing the display unit 43 of the user terminal 40.

In addition, in the program, the computer (management server 10), the information processing system 1, and the information processing method according to the present embodiment, as described above, the program causes the computer to further function as unlocking means 20. After the guidance transmission means 16 transmits the guidance indicating that the moving object 50 is to be moved, the guidance being transmitted to the user terminal 40, the moving object 50, or the port 60 in which the moving object 50 has been parked, a reservation for moving the moving object 50 is made when reservation information indicating that the moving object 50 is to be moved is received from the user terminal 40, the moving object 50, or the port 60 in which the moving object 50 has been parked. The unlocking means 20 transmits unlocking information to the moving object 50 so as to enable only a user having made the reservation for moving the moving object 50 to move the moving object 50. In this case, the moving object 50 is locked in an ordinary state, and, when the control unit 12 makes a reservation for moving the moving object 50 to the destination, only the user having made the reservation for moving the moving object 50 to the destination becomes able to unlock the moving object 50.

In addition, in the program, the computer (management server 10), the information processing system 1, and the information processing method according to the present embodiment, as described above, information about an amount of remaining power in the battery 55 is transmitted from the moving object 50 to the computer, and the guidance transmission means 16 transmits, to the user terminal 40, a guidance indicating that the moving object 50 in which the amount of remaining power in the battery 55 is smaller than a predetermined amount is to be moved. In this case, the user is asked to move the moving object 50 in which the amount of remaining power in the battery 55 is smaller than the predetermined amount, whereby this battery 55 can be charged.

The aspects of the program, the computer, the information processing system 1, the information processing method, and the like according to the present invention are not limited to those described above, and various changes may be made.

For example, the method in which, after a reservation for moving the moving object 50 is made, the user having made the movement reservation unlocks the moving object 50 is not limited to the above method. Any of other various methods may be employed as the method in which the user having made the movement reservation unlocks the moving object 50.

In addition, the reward to be given to the user by the reward giving means 24 is not limited to a gift usable in the predetermined app installed in the user terminal 40. The reward to be given to the user by the reward giving means 24 may be cash, virtual currency, carbon credit, or the like.

In addition, the method for ascertaining the present position of the moving object 50 is not limited to a method in which the GPS 57 is used. Other methods that may be employed are: a method in which the positions of the respective ports 60 are managed by the control unit 12 of the management server 10, and, when the moving object 50 is parked in any of the ports 60, the position of this port 60 is regarded as the present position of the moving object 50; a method in which the position of the moving object 50 is identified from a lease history or a return history of the moving object 50; a method in which the moving object 50 is mounted with a camera (not shown), and the present position is identified based on an image taken by the camera; and the like.

Although the moving object 50 is provided with the battery 55 and the power generator 56, the electrically-driven machine 54 does not have to be provided. In this case, no electrically-driven machine can provide assistance in movement of the moving object 50. However, power can be stored into the battery 55 by moving the moving object 50, and the power can be stored from the battery 55 into the power storage device 83 of the power storage facility 80.

In the above description, an aspect has been mentioned in which the guidance transmission means 16 transmits the guidance indicating that the moving object 50 is to be moved, the guidance being transmitted to the user terminal 40, the moving object 50, or the port 60 in which the moving object 50 has been parked. However, the present invention is not limited to such an aspect. In another aspect, the user may spontaneously move the moving object 50 in order to charge the battery 55 even when the guidance transmission means 16 does not transmit such movement guidance information to the user terminal 40 or the like. In this case as well, the reward giving means 24 gives a reward to the user having moved the moving object 50.

In a case where the moving object 50 such as a bicycle stays in the port 60 as well, a reward may be given to the user upon charging of the battery 55 through power generation by the power generator 56 as a result of pedaling the moving object 50 by the user. In this case, the program according to the present invention causes the computer (specifically, the management server 10) to function as information acceptance means and reward giving means. The information acceptance means accepts information in relation to a user having pedaled a moving object 50 provided with a power generator 56 configured to charge a battery through pedaling, the information being accepted from the moving object 50 or a user terminal 40 and being information about a charging amount by which the battery 55 of the moving object 50 has been charged during the pedaling. The reward giving means gives a reward to the user based on the information about the charging amount. In this case as well, the battery 55 of the electrically-driven machine 54 can be charged by the user pedaling the moving object 50, whereby a burden on the business operator can be mitigated.

The power generator 56 provided to the moving object 50 may perform photovoltaic power generation. In this case, when the port 60 is under a shade, the moving object 50 is moved out of the port 60 so as to be located in the sunshine, whereby the power generator 56 becomes able to generate power.

The moving object 50 related to the program, the computer, the system, and the information processing method according to the present invention is not limited to a bicycle. As the moving object 50 related to the program, the computer, the system, and the information processing method according to the present invention, another type of vehicle that can travel by an electrically-driven machine and that is mounted with a power generator may be used.

## Claims

1. A computer configured to execute a program to function as movement information acceptance means and reward giving means, wherein
the movement information acceptance means accepts information in relation to a user having moved a moving object provided with a power generator configured to charge a battery through movement, the information being accepted from the moving object or a user terminal and being information about a charging amount by which the battery of the moving object has been charged during the movement, and
the reward giving means gives a reward to the user based on the information about the charging amount.

2. The computer according to claim 1, configured to execute the program to further function as guidance transmission means, wherein
the guidance transmission means transmits a guidance indicating that the moving object is to be moved, the guidance being transmitted to the user terminal, the moving object, or a port in which the moving object has been parked.

3. The computer according to claim 1, configured to execute the program to further function as destination setting means and guidance transmission means, wherein
the destination setting means sets information about a destination to which the moving object is to be moved, and
the guidance transmission means transmits a guidance indicating that the moving object is to be moved to the destination set by the destination setting means, the guidance being transmitted to the user terminal, the moving object, or a port in which the moving object has been parked.

4. The computer according to claim 3, wherein
the destination setting means sets, as the destination to which the moving object is to be moved, a destination in which a power storage device is provided and in which power can be stored from the battery of the moving object into the power storage device.

5. The computer according to claim 1, configured to execute the program to further function as route guiding means, wherein
the route guiding means transmits, to the user terminal, guiding information about a movement route from a present position of the moving object to a destination to which the moving object is to be moved.

6. The computer according to claim 3, configured to execute the program to further function as unlocking means, wherein
after the guidance transmission means transmits the guidance indicating that the moving object is to be moved, the guidance being transmitted to the user terminal, the moving object, or the port in which the moving object has been parked, a reservation for moving the moving object is made when reservation information indicating that the moving object is to be moved is received from the user terminal, the moving object, or the port in which the moving object has been parked, and
the unlocking means transmits unlocking information to the moving object so as to enable only a user having made the reservation for moving the moving object to move the moving object.

7. The computer according to claim 3, wherein
information about an amount of remaining power in the battery is transmitted from the moving object to the computer, and
the guidance transmission means transmits, to the user terminal, a guidance indicating that the moving object in which the amount of remaining power is smaller than a predetermined amount is to be moved.

8. A computer configured to execute a program to function as information acceptance means and reward giving means, wherein
the information acceptance means accepts information in relation to a user having pedaled a moving object provided with a power generator configured to charge a battery through pedaling, the information being accepted from the moving object or a user terminal and being information about a charging amount by which the battery of the moving object has been charged during the pedaling, and
the reward giving means gives a reward to the user based on the information about the charging amount.

9. A system comprising:
a computer; and
a moving object provided with a power generator configured to charge a battery through movement, wherein
the computer executes a program to function as movement information acceptance means and reward giving means,
the movement information acceptance means accepts information in relation to a user having moved the moving object provided with the power generator configured to charge the battery through movement, the information being accepted from the moving object or a user terminal and being information about a charging amount by which the battery of the moving object has been charged during the movement, and
the reward giving means gives a reward to the user based on the information about the charging amount.

10. An information processing method to be performed by a computer having a control unit, the information processing method comprising the steps of:
accepting, by the control unit, information in relation to a user having moved a moving object provided with a power generator configured to charge a battery through movement, the information being accepted from the moving object or a user terminal and being information about a charging amount by which the battery of the moving object has been charged during the movement; and
giving, by the control unit, a reward to the user based on the information about the charging amount.
